(19) Europäisches Patentamt
European Patent Office
Office européen des brevets

(11) Veröffentlichungsnummer: **0 121 226**
**B1**

(12) # EUROPÄISCHE PATENTSCHRIFT

(45) Veröffentlichungstag der Patentschrift: **05.11.86**

(51) Int. Cl.⁴: **C 07 F 9/30**

(21) Anmeldenummer: **84103398.8**

(22) Anmeldetag: **28.03.84**

(54) **Verfahren zur Herstellung von Phosphinothricin.**

(30) Priorität: **02.04.83 DE 3312165**

(43) Veröffentlichungstag der Anmeldung: **10.10.84 Patentblatt 84/41**

(45) Bekanntmachung des Hinweises auf die Patenterteilung: **05.11.86 Patentblatt 86/45**

(84) Benannte Vertragsstaaten: **AT BE CH DE FR GB IT LI NL**

(56) Entgegenhaltungen:
**EP-A-0 011 245**

**BULL. CHEM. SOC. JAPAN, Band 36, Nr. 7, Juli 1963, Seiten 763-769; M. Murakami et al.: "Homogeneous hydrogenations of organic compounds with cobalt complex ions. VII.Homogeneous hydrogenations of organic compounds with a cyano cobalt complex as a catalyst"**
**JOURNAL OF THE AMERICAN CHEMICAL SOCIETY, Band 90, Nr. 13, 19. Juni 1968, Seiten 3659-3665; T.L. EMMICK et al.: "Unsymmetrical secondary phosphine oxides. Synthetic, isotopic exchange and stereochemical studies"**

(73) Patentinhaber: **HOECHST AKTIENGESELLSCHAFT, Postfach 80 03 20, D-6230 Frankfurt am Main 80 (DE)**

(72) Erfinder: **Mildenberger, Hilmar, Dr., Fasanenstrasse 24, D-6233 Kelkheim (Taunus) (DE)**
Erfinder: **Tammer, Thomas, Dr., Höchster Strasse, 22, D-6238 Hofheim am Taunus (DE)**

**EP 0 121 226 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein neues Verfahren zur Herstellung von 4-(Hydroxymethylphosphinyl)-2-aminobuttersäure (= Phosphinothricin) der Formel I

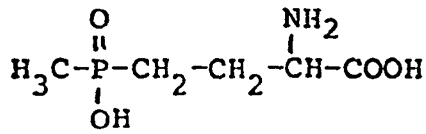 . (I)

und ihren Salzen, insbesondere des Ammoniumsalzes.

Die Verbindung I ist bekannt und wird z.B. in Helv. Chim-Acta 55, 229 (1972) und DE-OS 27 17 440 als Bakterizid bzw. Herbizid beschrieben. Zur Herstellung von I sind in der Literatur bereits zahlreiche Methoden beschrieben [Helv Chim. Acta 55, 229 (1972); Japan. Kokai Sho-48-091019 (27.11.1973); Rocz. Chem. 49, 2 127 (1975). J. prakt. Chemie 318, 157 (1976); EP-A 9 022 (12.07.1979); Pol. J. Chem. 53, 937, (1979); EP-A 18 145 (13.12.1979); JA-A Sho-55-064 595; C.A. 94, 84 295 b (15.05.1980); EP-A 11 245], die jedoch mit wenigen Ausnahmen keine befriedigenden Ausbeuten liefern.

Gemäß dem in EP-A 11 245 beschriebenen Verfahren entstcht 1 nach folgender Reaktion

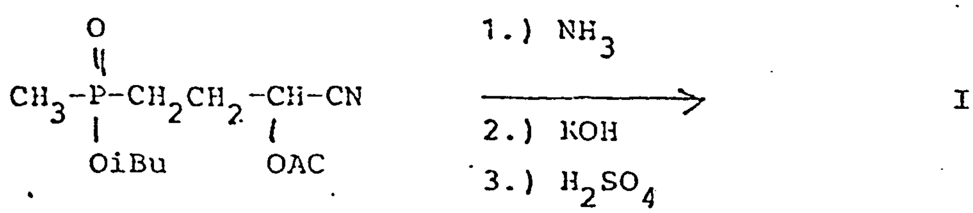


in einer Ausbeute von ca. 85 %.

Nachteilig an diesem Verfahren ist der recht erhebliche Salzanfall und die aufwendige Abtrennung von I aus dem Reaktionsgemisch da die entstehende α-Aminosäure Löslichkeitseigenschaften wie die von anorganischen Salzen besitzt. Ebenso wirken sich Verunreinigungen, die bei der Herstellung der Ausgangsverbindung durch Addition des Methanphosphonigsäureesters an Acroleincyanhydrinacetat entstehen, negativ auf den Verlauf der letzten Stufe aus und mindern deutlich den Ertrag. Ein zusätzlicher Nachteil ist darin zu sehen, daß die Synthese von optisch aktivem I nach diesem Verfahren nicht möglich ist.

Es wurde nun gefunden, daß man die beschriebenen Nachteile ohne Verminderung der Ausbeute vermeidet, wenn man 4-(Hydroxymethylphosphinyl)-2-oxobuttersäure der Formel II

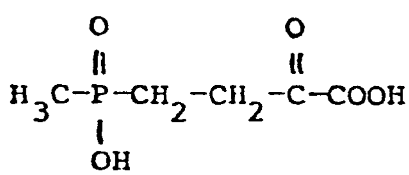 (II)

oder ihre Salze in Gegenwart eines Hydrierungskatalysators bei Temperaturen von -10 bis +150°C in einer Wasserstoffatmosphäre mit Amoniak oder primären Aminen deren C-N-Bindung durch den Hydrierungskatalysator hydrogenolytisch gespalten wird, behandelt.

Die reduktive Aminierung von α-Oxocarbonsäuren zu den entsprechenden α -Aminocarbonsäuren ist an sich bekannt. Dennoch ist das Ergebnis des erfindungsgemäßen Verfahrens in mehrfacher Hinsicht als überraschend zu bezeichnen.

Zum einen mußte damit gerechnet werden, daß unter den Hydrierungsbedingungen auch der Phosphinsäureteil der α -Oxobuttersäure II reduziert würde. [Helv. Chim. Acta 49, 842 (1966); J. Am. Chem. Soc. 90, 3 459 (1968); J. Organometallic Chcm. 97, C 31 (1975); Chem. Ber. 113, 1 356 (1980)]. Zum anderen war zu erwarten, daß bei der Reaktion die unerwünschte 4-(Hydroxymethylphosphinyl)-2-hydroxybuttersäure der Formel III

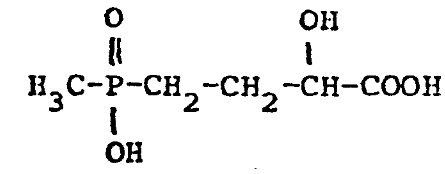
(III)

bzw. ihre Salze entstehen würde. Z.B. ist aus Bull. Chem. Soc. Japan 36, 763 (1963) bekannt, daß bei der reduktiven Aminierung von α-Ketoglutarsäure (dem Carboxyl-analogen von II) in erheblichem Maße α-Hydroxyglutarsäure neben der gewünschten α-Aminoglutarsäure gebildet wird.

Angesichts dieser Tatsachen war die hohe chemische Ausbeute und die Reinheit des Verfahrensproduktbei Anwendung des erfindungsgemäßen Verfahrens nicht zu erwarten.

Wie unerwartet ein solches Verfahren war, wird besonders deutlich dadurch, daß zwar viele Verfahren zur Herstellung von I beschrieben worden sind, kein einzigen jedoch diese Möglichkeit in Betracht gezogen hat, obwohl eine ganze Reihe von α-Aminosäuresynthesen auf der reduktiven Aminierung von α-Oxocarbonsäuren aufbauen.

Das als Ausgangsverbindung für das erfindungsgemäße Verfahren benötigte II bzw. seine Salze sind aus handelsüblichen 3-(Alkoxymethylphosphinyl)-propionsäureestern der allgemeinen Formel IV,

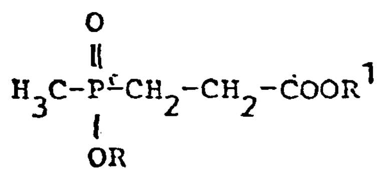
(IV)

worin R und $R^1$ gleich oder verschieden sein können und jeweils einen ($C_1$-$C_4$)-Alkyliest bedeuten, gemäß EP-A 30 424 herstellbar. Als Salze kommen die Mono- und Bis-Salze von II insbesondere die Natrium-, Kalium- und Ammoniumsalze in Frage.

Als Lösungs- bzw. Verdünnungsmittel für das erfindungsgemäße Verfahren eignen sich bevorzugt niedere Alkohole, wie Methanol, Ethanol und Isopropanol oder Wasser, oder auch Gemische dieser Lösungs- bzw Verdünnungsmittel.

Die Reaktionstemperaturen betragen im allgemeinen -10 bis 150° C vorzugsweise 20 - 100° C.

Als Hydrierungskatalysatoren kommen bevorzugt heterogene Katalysatoren, wie z.B. Platin-, Palladium-, Nickel-, Kobalt- und Rhodium-Katalysatoren in ihren verschiedensten Anwendungsformen in Frage. Auch der Einsatz von homogenen Katalysatoren, wie z.B. Kaliumpentacyano-kobaltat oder Metallhydriden(z.B. $LiAlH_4$, $NaBH_4$) ist möglich.

Als Amine kommen für das erfindungsgemäße Verfahren neben Ammoniak auch primäre Amine, wie Benzylamin, Benzhydrylanin, Tritylamin,D,L-1-Phenylethylamin, (+)-1-Phenylethylamin, und (-)-1-Phenylethylamin in Frage.

Ammoniak oder das primäre Amin werden äquimolar oder in einem bis zu 10fachen Überschuß eingesetzt.

Das erfindungsgemäße Verfahren wird je nach der Natur das verwendeten Katalysators in einer Wasserstoffatmosphäre im allgemeinen bei Drucken zwischen 1 und 200 bar vorzugsweise zwischen 1 und 50 bar durchgeführt.

Die Reaktion kann als beendet angesehen werden, wenn unter den gegebenen Reaktionsbedingungen kein Wasserstoff mehr verbraucht wird (Druckkonstanz).

Bei dem erfindungsgemäßen Verfahren gestaltet sich die Isolierung des Verfahrensproduktes, insbesondere beim Arbeiten mit heterogenen Katalysatoren, die durch Filtration und/oder Zentrifugieren leicht abtrennbar sind, apparativ sehr einfach, da das Verfahrensprodukt nach Abdampfen des Lösungs- bzw. Verdünnungsmittels unter vermindertem Druck bereits in ausreichender chemischer Reinheit anfällt. Die Ausbeuten betragen ca. 85 - 95 %.

Das rohe Verfahrensprodukt kann zusätzlich anschließend entweder durch Umkristallisieren oder durch Chromatographie weiter gereinigt werden.

Das erfindungsgemäße Verfahren wird anhand der folgenden Herstellungsbeispiele näher erläutert.

**Beispiel 1**

**Ammoniumsalz der 4-(HydroxymethylPhosPhinyl)-2-aminobuttersäure**

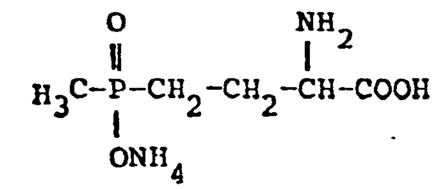

9,0 g (0.05 mol) 4-(Hydroxymethylphosphinyl)-2-oxobuttersäure wurden in 50 ml Methanol gelöst, das bei 10°C mit Ammoniak gesättigt worden war. Nach Zugabe von 1 g Raney-Nickel wurde bei 100 bar und 50°C in einem Schüttelautoklaven hydriert. Nach Beendigung der Wasserstoffaufnahme wurde entspannt, vom Katalysator abfiltriert und der überschüssige Ammoniak und das Lösungsmittel unter vermindertem Druck abdestilliert. Als Destillationsrückstand wurden 9,8 g farbloses, glasartig erstarrtes Produkt erhalten, das sich in einer Reibschale pulverisieren ließ. Schmelzbereich 205 - 215°C (Zers.). Das Produkt bestand zu 90 % (HPLC-Analyse) aus dem gewünschten Ammoniumsalz des Phosphinothricins.

**Beispiel 2**

Analog zu Beispiel 1 wurden 9,0 g (0.05 mol) 4-(Hydroxy-methylphosphinyl)-2-oxobuttersäure in Anwesenheit von 1 g 5 %igem Palladium auf A-Kohle bei 5 bar und 50°C hydriert.

Nach Trocknen im Vakuum wurden 9,8 g pulverisiertes, farbloses Frodukt erhalten, das bei 208 - 215°C unter Zersetzung schmolz und zu 93 g (HPLC-Analyse) aus dem Ammoniumsalz von I bestand.

**Beispiel 3**

Analog Beispiel 1 wurden 18,0 g,(0.1 mol) 4-)y,droxy-nethylphosphinyl)-2-oxobuttersäure nach Zugabe von 1 g 10 %igem Platin auf A-Kohle bei 5 bar und 50°C hydriert.

Nach Trocknen im Vakuum wurden 19,5 g farbloses Pulver vom Schmelzbereich 205 - 210°C (Zers.) erhalten, das zu 87 % (HPLC-Analyse) aus dem Ammoniumsalz von I bestand.

**Beispiel 4**

9,0 g (0 05 mol) 4-(Hydroxymethylphosphinyl)-2-oxobutter-säure wurden in 50 ml Methanol gelöst und innerhalb von 1 Stunde bei 20 -25°C zu einer intensiv gerührten Suspension von 1 g 5 %igem Palladium auf A-Kohle in 50 ml mit Ammoniak gesättigtem Methanol bei einem Wasserstoffdruck von ca. 1,0 bis 1,2 bar zugetropft. Hierbei wurde eine Eigenbauapparatur entsprechend Houben-Weyl, Bd.IV/1c, S. 34 ff. benutzt. Nach beendeter Wasserstoffaufnahme wurde analog Beispiel 1 aufgearbeitet.

Es wurden 9,8 g farbloses Pulver erhalten, das zwischen 208 und 213°C unter Zersetzung schmolz und zu 95 % (HPLC-Analyse) aus dem Ammioniumsalz des Phosphinothricins bestand. Aus dem rohen Produkt konnten durch Kristallisation aus Methanol/Wasser 8 g reines I (Ammoniumsalz) vom Schmelzpunkt 210°C(Zers.) gewonnen werden.

**Beispiel 5**

2,0 g (0.011 mol) 4-(Hydroxymethylphosphinyl)-2-oxo-buttersäure wurden in 50 ml Wasser, in das bei 10°C ca. 0,5 - 0,6 (mol) Ammoniak eingeleitet worden waren, gelöst und nach Zugabe von 0,5 g 5 %igem Palladium auf Aktivkohle bei 2 bar und 25°C in einem Schüttelautoklaven hydriert. Nach beendeter Wasserstoffaufnahme wurde wie in Beispiel 1 aufgearbeitet. Hierbei fielen nach Trocknen im Vakuum 2,1 g farbloses Pulver an, das zu 89 % (HPLC-Analyse) aus dem Ammoniumsalz von I bestand.

**Beispiel 6**

11,2 g (0.05 mol) Bis-Natriumsalz der 4-(Hydroxymethyl-phosphinyl)-2-oxobuttersäure und 5,4 g (0.05 mol) Benzylamin wurden in 50 ml Methanol gelöst und nach Zugabe von 2 g 5 %igem Palladium auf A-Kohle bei 5 bar und 50°C in einem Schüttelautoklaven hydriert. Nach beendeter Wasserstoffaufnahme wurde vom Katalysator abfiltriert, und das Filtrat unter vermindertem Druck destilliert. Hierbei ging die Hauptmenge des Methanols zusammen mit Toluol und Spuren von nicht umgesetztem Benzylamin über.

Nach Trocknen des öligen Rückstandes im Vakuum wurden 11 g farbloses Pulver erhalten das zu 90 % (HPLC-Analyse) aus dem Bisnatriumsalz der 4-(Hydroxy-methylphosphinyl)-2-aminobuttersäure bestand.

**Patentansprüche**

Verfahren zur Herstellung von 4-(Hydroxymethyl-phosphinyl) -2-aminobuttersäure der Formel

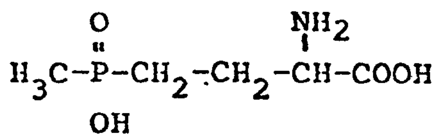

(I)

und ihren Salzen, dadurch gekennzeichnet daß man 4-(Hydroxymethyl-phosphinyl)-2-oxobuttersäure der Formel

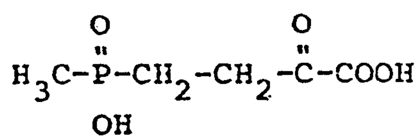

(II)

oder ihre Salze in Gegenwart eines Hydrierungskatalysators bei -10 bis +150°C in einer Wasserstoffatmosphäre mit Ammoniak oder primären Aminen deren C-N-Bindung durch den Hydrierungskatalysator hydrogenolytisch gespalten wird, behandelt.

**Claim**

A process for the preparation of 4-(hydroxyme-thylphosphinyl)-2-sninobutyric acid of the formula

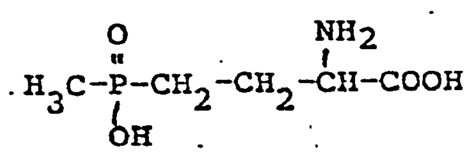

I

and its salts, which comprises reacting 4-(hydroxynethyl-phosphinyl)-2-oxobutyric acid of the formula

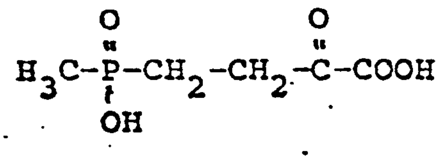 II

or its salts, in the presence of a hydrogenation catalyst at -10 to +150°C in a hydrogen atmosphere, with ammonia or with a primary amine the C-N bond of which being capable of hydrogenolytic cleavage by means of said hydrogenation catalyst.

**Revendication**

Procédé de préparation de l'acide (méthyl-hydroxy-phosphinyl)-4 amino-2 butyrique, corps qui répond à la formule I:

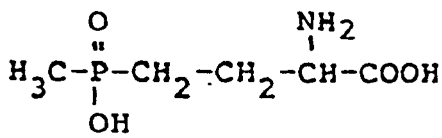 (I),

et de ses sels, procédé caratérisé en ce qu'on traite l'acide (méthyl-hydroxy-phospinyl)-4 oxo-2 butyrique de formule II:

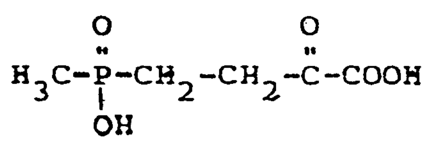 (II)

ou ses sels, en présence d'un catalyseur d'hydrogénation, à une température de -10 à +150°C, dans une atmosphère d'hydrogène, par de l'ammoniac ou par des amines primaires dont la liaison C-N est coupée par hydrogénolyse sous l'action du catalyseur d'hydrogénation.